# EUROPEAN PATENT APPLICATION

(11) **EP 3 444 701 A1**
(43) Date of publication of application: **20.02.2019**
(21) Application number: 17186318.6
(22) Date of filing: 15.08.2017
(51) Int. Cl.: G06F 1/16

(54) **IMPACT PROTECTION**

(71) Applicant: Vestel Elektronik Sanayi ve Ticaret A.S., 45030 Manisa (TR)
(72) Inventor: KUCUKSAHÍN,, Oguzhan, 45030 Manisa (TR)
(74) Representative: Flint, Adam

(57) **Abstract**

There is provided a hand-held device and method for protecting the device in the event of an impact. The device is provided with an inflatable bag (16, 30, 40), the bag (16, 30, 40) containing a gas, and one or more electric heating elements (50) arranged in thermal contact with the gas which, when energised, heat the gas and cause the gas to expand, thereby inflating the bag (16, 30, 40) to provide impact protection to the device. The one or more heating elements (50) may be energised upon detecting a dropping event by analysis, by a data processor (52), of data received from one or more sensors (52) in the device.

## Description

### Technical Field

The present disclosure relates to impact protection for hand-held devices.

### Background

It is known for example to provide impact countermeasures in electronic devices such as hand-held media devices including mobile phones, tablet computers, computer display devices. Impact countermeasures are of particular interest for use with devices having relatively fragile portions such as displays covered by a transparent material such as glass. Known impact countermeasures include the deployment of energy-absorbing structures from a housing of the electronic device upon detection of a motion suggesting that the device has been dropped and is falling under gravity towards a surface below.

### Summary

According to a first aspect disclosed herein, there is provided a hand-held device, comprising:
an inflatable bag, the bag containing a gas; and
one or more electric heating elements arranged in thermal contact with the gas which, when energised, heat the gas and cause the gas to expand, thereby inflating the bag to provide impact protection to the device.

An impact protection arrangement that uses heating of a gas to expand an inflatable bag provides for a more compact and reusable impact protection arrangement than those using conventional 'air-bags', inflated by release of a compressed gas.

In an example of the device, in a normal configuration, the inflatable bag is in a stowed position to enable normal use of the device and, in an impact protection configuration, the inflatable bag is inflated to provide an impact protection layer to at least one region of the device. In examples disclosed herein, the device may be returned easily from an impact protection configuration to a normal configuration when the heated gas cools.

In an example, the device comprises one or more gas containers, linked to or forming a part of the inflatable bag, for containing the gas. In an example implementation, the one or more gas containers are enclosed within a chassis of the device. Alternatively, in an example implementation the one or more gas containers form a part of a chassis of the device. This enables a minimal quantity of gas to be contained in a part of the inflatable bag that may be exposed when the device is being used in a normal configuration so that the inflatable bag does not interfere with normal use of the device.

In an example, the one or more heating elements comprise carbon-based filaments. Such a material enables a high current level to be passed through the heating element for a short period of time to enable rapid heating and expansion of the gas.

In an example, the one or more heating elements are arranged in direct contact with the gas. In an example implementation, the one or more heating elements are contained within the inflatable bag or within a gas container linked to the inflatable bag. Such an arrangement enables a rapid transfer of heat from the heating element to the gas. An inert gas such as helium is suitable for use in such an arrangement.

In an example, the device comprises: one or more sensors; and a data processor, arranged to receive data from the one or more sensors, to detect a dropping event by analysis of the received data and, upon detecting a dropping event, to trigger an energising of the one or more heating elements. The data processor makes use of data provided by any of the available sensors in the device to detect characteristics indicative of a dropping event. The data processor then activates an energising of the heating element and so a deployment of the inflatable bag before an expected time of impact.

In an example, the one or more sensors comprise at least one of a camera, an inertial motion sensor and a proximity sensor. Each of these sensor types may provide data useful in detecting a dropping event.

In an example, the device comprises: a switch; and a battery, wherein the data processor is arranged, upon detecting a dropping event, to activate the switch to connect the battery to the one or more heating elements thereby to supply an electric current to the one or more heating elements. The device may use a battery installed to power the device to energise the one of more heating elements

In an example, the device is a mobile phone device and the inflatable bag is arranged to provide impact protection to a display area of the device.

In an example, the device comprises a plurality of inflatable bags arranged to provide impact to protection to respective regions of the device. Each inflatable bag may be supplied by gas from a respective gas container or from a common gas container.

In the example of a mobile phone device, the inflatable bag is arranged to provide impact protection to a display region of the device.

According to a second aspect disclosed herein, there is provided a method for providing impact protection to a hand-held device, comprising:
detecting a dropping event by analysis of data received from one or more sensors in the device; and
upon detecting a dropping event, energising one or more electric heating elements arranged in thermal contact with a gas which heats the gas and causes the gas to expand into an inflatable bag, thereby to provide impact protection to the device.

### Brief Description of the Drawings

To assist understanding of the present disclosure and to show how embodiments may be put into effect, reference is made by way of example to the accompanying drawings in which:
Figure 1 shows schematically two perspective views of a mobile phone device according to examples disclosed herein;
Figure 2 shows schematically, in section, three arrangements for containment of gas according to examples disclosed herein;
Figure 3 shows schematically, in section, two inflatable bag arrangements according to examples disclosed herein; and
Figure 4 shows schematically an electric circuit of an impact protection system according to examples disclosed herein.

### Detailed Description

Hand-held electronic devices are known to include portions that are, by design, relatively resilient to impact by dropping but also have portions that are relatively fragile. Impact countermeasures are known for protecting the relatively fragile portions of a device, such as a transparent display cover. Known countermeasures include direct protection features and indirect protection features for fragile portions of a device. Examples of direct protection measures include deployment of energy-absorbing structures from a housing of the device, such as posts or other solid protrusions which may be retracted and re-used after impact. Examples of indirect protection methods include techniques for increasing the chance that a point of impact of the device will be a resilient portion of the device. Indirect techniques include use of actuators to change the orientation of the device as it falls or retraction of a display cover below its usual surface level so that a resilient surrounding portion may more likely be a point of impact.

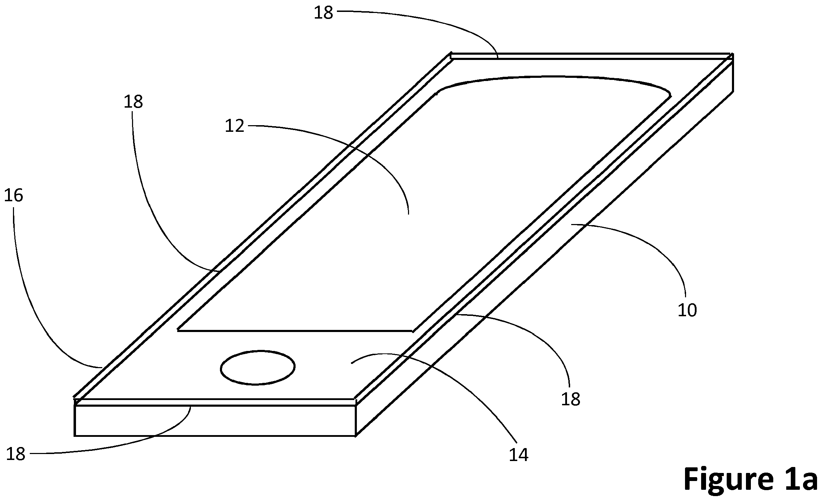

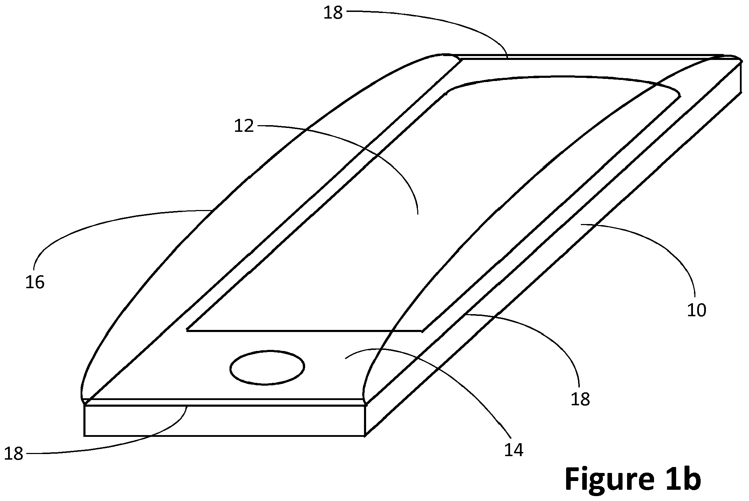

It has also been suggested that conventional 'air-bag' technology be applied to hand-held electronic devices. However, conventional air-bags are not easily re-useable and cannot be retracted into the device following impact without access to specialist services. Furthermore, they rely upon storage of a pressurised gas within the device to activate the air-bag, which may not be feasible or practical in some hand-held devices. Examples of a hand-held device having a different type of inflatable bag system according to embodiments of an invention will now be described below with reference initially to Figure 1, showing two states of the system: a normal configuration in Figure 1a; and an impact protection configuration in Figure 1b. The device may be for example a mobile phone, including a smart phone, a tablet computer, a wearable device such as a smartphone or fitness tracker, etc.

Referring to Figure 1a, there is shown schematically a perspective view of a mobile phone device according to an example of the present invention, in a normal configuration intended for normal use of the device. The mobile phone device comprises a chassis 10, incorporating a display having a transparent cover 12 formed in an upper surface 14 of the chassis 10. The transparent cover 12 may be formed using a material that is less resilient to impact, in the event that the device is dropped, than other parts of the chassis 10, for example from glass.

The transparent cover 12 is itself covered by a transparent layer comprising an inflatable bag 16. The inflatable bag 16, made from a transparent and flexible material, is attached to the upper surface 14 of the chassis 10, for example at points around a perimeter edge 18. When in the normal configuration, the material of the inflatable bag 16 lies flat over the surface 12, 14 so as not to interfere with normal use of the phone device.

Referring to Figure 1b, there is shown schematically a perspective view of the mobile phone device of Figure 1a, in an impact protection configuration that may be triggered in the event that a dropping of the device is detected. The transparent inflatable bag 16 is filled with a gas which may be caused to expand and so increase the pressure of gas within the bag 16. The expanding gas causes the surface of the bag 16 that is not attached to the phone chassis 10 perimeter edge 18 to rise up away from the display cover 12. The bag 16 thereby forms an impact-absorbing cushion to protect the display cover 12 at a time of impact, should the point of impact be to that face of the device. Techniques for causing the gas to expand will be described below.

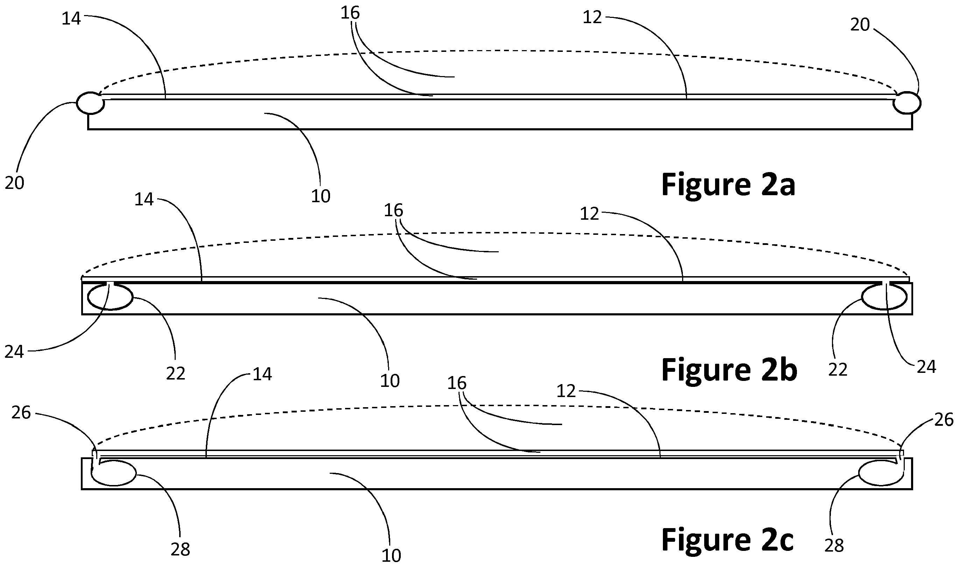

When the bag 16 is in the normal configuration shown in Figure 1a, the gas is contained mainly within one or more gas containers so that the bag 16 may lay flat over the surface 14. Several examples will now be described for containment of the gas with reference to Figure 2.

Referring to Figure 2a, a sectional view is provided through the mobile phone device shown in Figure 1a in a normal configuration, with the bag 16 lying flat against the surface 12, 14 and, as represented by a dashed line, with the bag 16 in an impact protection configuration. In this first example, gas containers 20 are shown forming a part of the chassis 10, at a perimeter edge of the chassis 10. Gas contained in the gas containers 20 when in a normal configuration of the phone device may be triggered to expand and pass into that portion of the bag overlaying the surface 14, increasing the gas pressure in the bag 16 and causing it to adopt the impact protection configuration profile shown by a dashed line.

Referring to Figure 2b, in an alternative arrangement, a sectional view is provided through the mobile phone device shown in Figure 1a in a normal configuration, but in this example gas containers 22 are shown located within the chassis 10. Small apertures 24 are formed through the surface 14 to enable gas to pass from the gas containers 22 to the bag 16 and, when returning the device to the normal use configuration, from the bag 16 to the gas containers 22.

Referring to Figure 2c, in an alternative arrangement, a sectional view is provided through the mobile phone device shown in Figure 1a in a normal configuration, but in this example the bag 16 extends through slots 26 formed in the surface 14 into a void within the chassis 10. Those sections of the bag 16 extending into the chassis 10 form pockets 28 in which the gas may be retained. In this example separately formed gas containers, as provided in the Figure 2a and Figure 2b examples, are not required.

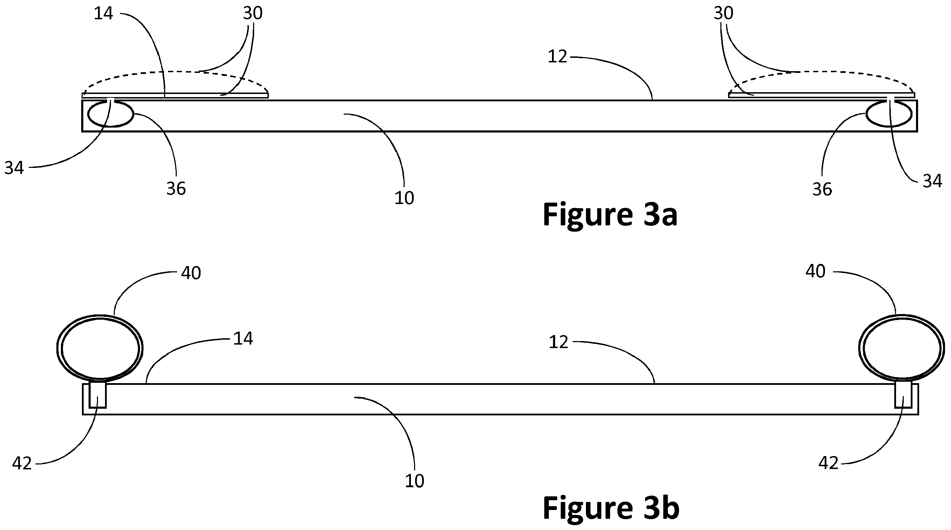

There are numerous alternative configurations that may be implemented for the bag 16 or for more than one bag 16. Several examples will now be described briefly with reference to Figure 3.

Referring to Figure 3a, a sectional view is provided through the mobile phone device shown in Figure 1, having two smaller inflatable bags 30, one at each end of the phone device, having features similar to the arrangement shown in Figure 1. The bags 30 are shown in the normal configuration and, using a dashed line, in their impact protection configuration. For example, the bags 30 may extend over only that region of the surface 14 that forms the display cover 12. Alternatively, one small bag may be provided at each end of the surface 14. In the latter example, each small bag 16 may be configured in a similar way to the bag 16 shown in Figure 1a, being fixed over a small region of the surface 14.

Referring to Figure 3b, a sectional view is provided through the mobile phone device shown in Figure 1, in an impact protection configuration having two smaller inflatable bags 40, deployed one at each end of the phone device. During a normal configuration, each of the bags 40 may be stowed within a respective recess 42 formed within the surface 14 of the chassis 10. When the gas is caused to expand, the bags 16 emerge from the recesses 42 and inflate to the configuration shown in Figure 3b. The bags 40 may be anchored within the recesses 42, but not otherwise fixed to the surface 14.

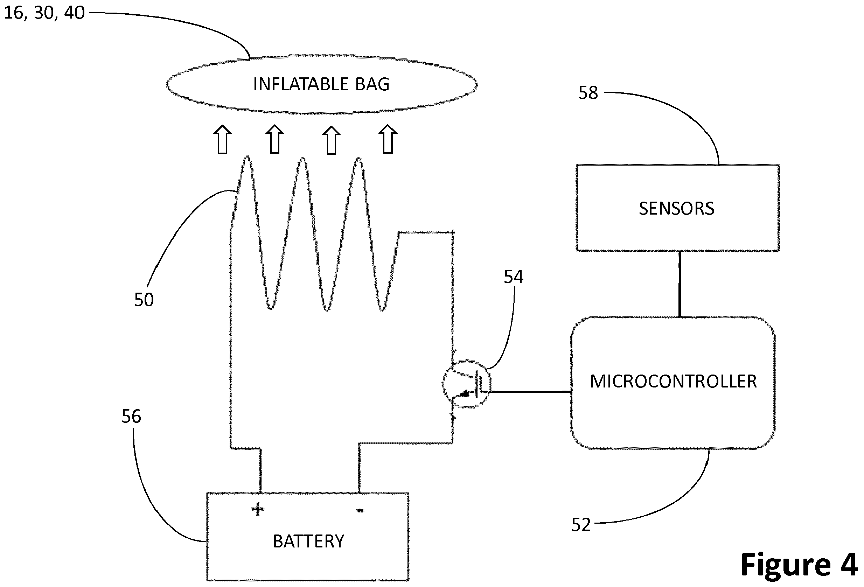

In all the examples described so far with reference to Figure 1, 2 and 3, the bags 16, 30, 40 inflate due to expansion of the gas contained within the bag 16, 30, 40 or within an associated gas container 20, 22. Further detail will now be provided with reference to Figure 4 of an example implementation of an impact protection system that includes a gas-inflatable bag 16, 30, 40 of any of the arrangements discussed above.

Referring to Figure 4, an impact protection system comprises an inflatable bag 16, 30, 40 as described above and a heating element 50 located within the mobile phone device. The heating element 50 is located to heat the gas contained within the bag 16, 30, 40 or within an associated gas container 20, 22. The heating element 50 may be for example a carbon-based filament able to pass a high current and so heat up rapidly. The heating element 50 may be installed within the gas container 20, 22 or within the bag 16, 30, 40 to ensure a rapid heating and expansion of the gas. The gas may be an inert gas such as helium, for example.

The heating element 50 is controlled by a microcontroller 52 through a switch 54 which may comprise a Metal Oxide Semiconductor Field Effect Transistor (MOSFET) or an Insulated Gate Bipolar Transistor (IGBT). The switch 54 is selected according to the current level required to heat the heating element 50. The switch 54 connects a battery 56, for example the mobile phone battery, across the heating element 50 to pass an electric current through the heating element for a predetermined time period set by the microcontroller 52. The switch transistor 54 and the heating element 50 are selected to achieve a required level of heating of the gas and expansion of the gas by a required volume within a response period of the order of milliseconds. The level of heating required within that period may be determined by a person of ordinary skill in the relevant art given the type and volume of gas contained within the bag 16, 30, 40 and/or the gas containers 20, 22 The response period is desired to be less than the time period from detection of a falling device to impact of the device on the ground or other surface.

The microcontroller 52 is arranged to detect a dropped mobile phone device using data from one or more sensors 58 incorporated within the device, and functionality implemented by the microcontroller 52. The sensors 58 installed in the phone device may comprise at least one of a camera, an inertial motion sensor such as an accelerometer and a proximity detector such as an ultrasonic range finder. A computer program may be installed and executed by the microcontroller 52, arranged to receive the sensor data and to determine whether the received data are indicative of a dropping of the phone device. Optionally, the computer program may analyse the received data to determine a likely time of impact with an approaching surface.

Detection of a dropping event may for example be achieved by comparison of received sensor data with predetermined models defining characteristics of sensor data expected during dropping events. A dropping event may be characterised for example by a sudden acceleration of the device in a direction and at a rate expected due to gravity. The expected time to impact may be estimated based upon an assumed height of normal use. Alternatively, image data or proximity sensor detector data may be analysed to recognise characteristics indicating an approaching surface from which an expected time to impact may be determined.

If a dropping event is detected, then the microcontroller 52 triggers the switch transistor 54 to energise the heating element 50, which heats up rapidly, so causing a rapid heating and expansion of the gas and inflation of the respective bag 16, 30, 40. The pressure of expanding gas is expected to increase, up to theoretical threshold level, with increasing time. That is, the greater the distance fallen and therefore time spent falling towards a surface, the greater the gas pressure within the inflated bag 16, 30, 40 and therefore the greater the impact protection that might be expected by the inflated bag.

The microcontroller 52 is also arranged to sense when the mobile phone device has reached a point of impact or has become stationary and hence determine an end to the dropping event. If impact is detected, the microcontroller 52 switches off the switch transistor 54 and so terminates the flow of current to the heating element 50. The gas is then able to cool and contract, so allowing the bag 16, 30, 40 to deflate and to adopt the normal configuration for the phone device and impact protection system.

When the gas has cooled, in the arrangement shown in Figure 3b, it may be necessary for a user to stow the deflated bags 40 within the provided recesses 42. In the arrangements shown in Figure 1, Figure 2 and Figure 3a, the user may press each of the bags 16, 30 flat against the surface 14 and so force much of the remaining cooled gas to return to a respective gas container 20, 22. Alternatively, if the bags 16, 30, 40 are made from a material with elastic properties, then the elasticity of the material may be arranged to expel the cooled gas from that part of the bag overlaying the surface 14.

Particular examples of impact protecting inflatable bags 16, 30, 40 have been described above and shown in the figures. However, it would be apparent to a person of ordinary skill in the relevant art that other inflatable bag arrangements may be envisaged using one or more bags 16, 30, 40, all falling within the intended scope of the present invention. All such arrangements may operate on the principle provided by the present invention of heating a gas contained within the bag 16, 30, 40 or within associated gas containers 20, 22 and causing to gas to expand rapidly to inflate the bag 16, 30, 40.

It will be understood that the microcontroller or circuitry referred to herein may in practice be provided by a single chip or integrated circuit or plural chips or integrated circuits, optionally provided as a chipset, an application-specific integrated circuit (ASIC), field-programmable gate array (FPGA) or digital signal processor (DSP), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A hand-held device, comprising:
an inflatable bag (16, 30, 40), the bag (16, 30, 40) containing a gas; and
one or more electric heating elements (50) arranged in thermal contact with the gas which, when energised (52, 54, 56), heat the gas and cause the gas to expand, thereby inflating the bag (16, 30, 40) to provide impact protection to the device.

2. The device according to claim 1 wherein, in a normal configuration, the inflatable bag (16, 30, 40) is in a stowed position to enable normal use of the device and, in an impact protection configuration, the inflatable bag (16, 30, 40) expands to provide an impact protection layer to at least one region (12, 14) of the device.

3. The device according to claim 1 or claim 2, comprising one or more gas containers (20, 22), linked to or forming a part of the inflatable bag (16, 30, 40), for containing the gas.

4. The device according to claim 3, wherein the one or more gas containers (20, 22) are enclosed within a chassis (10) of the device.

5. The device according to claim 3, wherein the one or more gas containers (20, 22) form a part of a chassis (10) of the device.

6. The device according to any one of claims 1 to 5, wherein the one or more heating elements (50) comprise carbon-based filaments.

7. The device according to any one of claims 1 to 6, wherein the one or more heating elements (50) are arranged in direct contact with the gas.

8. The device according to claim 7, wherein the one or more heating elements (50) are contained within the inflatable bag (16, 30, 40) or within a gas container (20, 22) linked to the inflatable bag (16, 30, 40).

9. The device according to any one of claims 1 to 8, comprising:
one or more sensors (52); and
a data processor (52), arranged to receive data from the one or more sensors (52), to detect a dropping event by analysis of the received data and, upon detecting a dropping event, to trigger an energising of the one or more heating elements (50).

10. The device according to claim 9, wherein the one or more sensors (52) comprise at least one of a camera, an inertial motion sensor and a proximity sensor.

11. The device according to claim 9 or claim 10, comprising:
a switch (54); and
a battery (56),
wherein the data processor (52) is arranged, upon detecting a dropping event, to activate the switch (54) to connect the battery (56) to the one or more heating elements (50) thereby to supply an electric current to the one or more heating elements (50).

12. The device according to any one of claims 1 to 11, wherein the device is a mobile phone device and the inflatable bag (16, 30, 40) is arranged to provide impact protection to a display area (12) of the device.

13. The device according to any one of claims 1 to 12, comprising a plurality of inflatable bags (16, 30, 40) arranged to provide impact to protection to respective regions (12, 14) of the device.

14. The device according to claim 12, wherein the inflatable bag (16, 30, 40) is arranged to provide impact protection to a display region (12) of the device.

15. A method for providing impact protection to a hand-held device, comprising:
detecting a dropping event by analysis of data received from one or more sensors (52) in the device; and
upon detecting a dropping event, energising one or more electric heating elements (50) arranged in thermal contact with a gas which heats the gas and causes the gas to expand into an inflatable bag (16, 30, 40), thereby to provide impact protection to the device.
